**Europäisches Patentamt**

**European Patent Office**

**Office européen des brevets**

(19)

(11) Veröffentlichungsnummer: **0 078 449 B2**

# (12) NEUE EUROPÄISCHE PATENTSCHRIFT

(45) Veröffentlichungstag der neuen Patentschrift:
08.01.92 Patentblatt 92/02

(51) Int. Cl.⁵: **C08J 3/03, C08J 3/12, C04B 24/24**

(21) Anmeldenummer: 82109670.8

(22) Anmeldetag: 20.10.82

(54) **Verfahren zum Herstellen von blockfesten, in Wasser redispergierbaren Polymerisat-Pulvern durch Versprühen von wässrigen Polymerisat-Dispersionen.**

Die Akte enthält technische Angaben, die nach dem Eingang der Anmeldung eingereicht wurden und die nicht in dieser Patentschrift enthalten sind.

(30) Priorität: 30.10.81 DE 3143071
30.10.81 DE 3143070

(43) Veröffentlichungstag der Anmeldung:
11.05.83 Patentblatt 83/19

(45) Bekanntmachung des Hinweises auf die Patenterteilung:
04.01.89 Patentblatt 89/01

(45) Bekanntmachung des Hinweises auf die Entscheidung über den Einspruch:
08.01.92 Patentblatt 92/02

(84) Benannte Vertragsstaaten:
AT BE CH DE FR GB IT LI NL SE

(56) Entgegenhaltungen:
DE-A- 2 049 114
DE-A- 2 238 903
DE-A- 2 407 505
DE-A- 2 445 813
GB-A- 890 691

(56) Entgegenhaltungen:
GB-A- 2 065 141
US-A- 4 042 529
Encyclopedia of Polymer Science and Technology, Vol. 15 (1971), p. 698
Ullmanns's Enzyklopädie der Techn. Chemie, 4. Aufl., Bd. 2 (1972), S. 703-704, Verlag Chemie Weinheim
Spray Drying Handbook, 3. Edition (1979), K. Mastersp. 53, 518

(73) Patentinhaber: BASF Aktiengesellschaft
Carl-Bosch-Strasse 38
W-6700 Ludwigshafen (DE)

(72) Erfinder: Meinelt, Werner
Guidostrasse 13
W-6701 Otterstadt (DE)
Erfinder: Matthias, Klaus, Dr.
Rathausstrasse 63-65
W-6806 Viernheim (DE)
Erfinder: Franzmann, Gernot, Dr.
Im Woogtal 13
W-6719 Bobenheim (DE)
Erfinder: Petri, Rolf
Pierstrasse 10B
W-6710 Frankenthal (DE)
Erfinder: Kraus, Friedrich, Dr.
L 11,20-22
W-6800 Mannheim (DE)

EP 0 078 449 B2

## Beschreibung

In der Praxis kann man redispergierbare Polymerisat-Pulver aus wäßrigen Polymerisat-Dispersionen durch Versprühen der Dispersionen unter Verwendung von Ein- oder Mehrstoffdüsen, beispielsweise in einem heißen Luftstrom, herstellen. Dies gelingt praktisch dann, wenn die Glastemperatur der Polymerisate hoch genug ist, d.h. meist über 50°C liegt. Liegt die Glastemperatur der in Wasser dispergierten Polymerisate zu tief, so treten meist schon beim Versprühen, insbesondere unter der Einwirkung von Wärme und oder Druck, Verklebungen ein. Hierunter leidet die Redispergierbarkeit der Polymerisat-Pulver.

Um bei Dispersionen von Polymerisaten, die verhältnismäßig niedere Glastemperaturen aufweisen, durch Versprühen redispergierbare Polymerisat-Pulver zu erhalten, hat man daher schon versucht, den wäßrigen Dispersionen verhältnismäßig große Mengen an Schutzkolloiden oder an indifferenten Stoffen zuzugeben. Man erhält dann zwar Polymerisat-Pulver, die etwas besser redispergiert werden können, doch leiden unter derartigen Zusätzen andere Eigenschaften, z. B. die Wasserbeständigkeit von Filmen, die aus derartigen, wieder in Wasser dispergierten, Polymerisat-Pulvern hergestellt wurden. Geht man dabei von wäßrigen Dispersionen solcher Polymerisate aus, die besonders niedrige Erweichungspunkte bzw. besonders tiefliegende minimale Filmbildetemperaturen (MFT) aufweisen, beispielsweise von wäßrigen Dispersionen von Haftkleber-Polymerisaten, so sind auch diese Maßnahmen praktisch nicht wirksam, so daß oft schon beim Versprühen der Gemische Verfilmen und starke Belagsbildung an den Trockenapparaturen eintritt. Dies gilt auch beim Zusatz von indifferenten Stoffen, wie feinteiliger Kieselsäure, die bei Anwendung kleiner Mengen ohnehin keine Wirkung zeigen. Auch werden durch derartige Zusätze bei der Anwendung der redispergierbaren Polymerisat-Pulver als Zusatz zu hydraulischen Bindemitteln oft eine Verminderung der erzielbaren Druck-, Biege- und Klebefestigkeit beobachtet.

Aus der DE-OS-2 049 114 ist es zudem bekannt, freifließende, blockfeste, in Wasser redispergierbare pulverförmige Polymerisate durch Versprühen von Dispersionen herzustellen, wobei man den Dispersionen vor dem Versprühen wasserlösliche, sulfonatgruppenhaltige Kondensationsprodukte aus Melamin und Formaldehyd in Mengen von 2 bis 30 Gew.-%, insbesondere von 5 bis 19 Gew.-%, bezogen auf den Polymerisatgehalt der Dispersion, zusetzt. Hierdurch soll ein Verkleben der beim Versprühen gebildeten Pulver während des Herstellungsvorgangs verhindert und die Lagerungsbeständigkeit der Pulver erhöht werden. Auch soll bei der Einwirkung von Wärme und Druck kein Verblocken der Pulver eintreten, insbesondere dann, wenn die Polymerisate der Dispersionen einen Erweichungspunkt im Bereiche von 0 bis 40° C aufweisen. Durch die redispergierbaren Pulver soll überdies bei ihrem Zusatz zu hydraulischen Bindemitteln eine Verbesserung der mit dem Bindemittel hergestellten Formkörper hinsichtlich deren Druck- und Biegezugfestigkeit auftreten. Ein Nachteil dieses Verfahrens ist jedoch darin zu sehen, daß insbesondere bei der Lagerung der Produkte in großen Mengen nach einiger Zeit Verblockung eintritt, wodurch die Redispergierbarkeit und Rieselfähigkeit der Produkte leiden. Dies gilt insbesondere für Produkte, die sich von Polymerisat-Dispersionen ableiten, deren Polymerisate verhältnismäßig niedere Erweichungspunkte bzw. eine verhältnismäßig niedere MFT aufweisen, wie dies z. B. bei wäßrigen Dispersionen von Haftkleber-Polymerisaten der Fall ist.

Aus der DE-OS-2 445 813 ist zudem ein Verfahren zur Herstellung von redispergierbaren Kunststoffpulvern bekannt, bei dem Polymerisat-Dispersionen zunächst 5 - 50 Gew.-% an Naphthalinsulfosäure-Formaldehyd-Kondensationsprodukten zugesetzt und die Gemische dann bei einer Temperatur unterhalb der Erweichungstemperatur (d.h. etwa unterhalb der Glastemperatur) des Polymeren getrocknet werden.

Bei dem Verfahren der DE-OS-2 238 903 werden Gemische aus 2 wäßrigen Copolymerisat-Dispersionen sprühgetrocknet, von denen das eine Copolymerisat Glastemperaturen im Bereich von etwa 30° C, das andere Glastemperaturen über etwa 90° C aufweist, und die Trocknungstemperaturen liegen meist zwischen 100 und 130° C. Dieser Offenlegungsschrift können jedoch keine Hinweise darauf entnommen werden, inwieweit es ggf. möglich ist, auf die Mitverwendung einer Copolymerisat-Dispersion einer Glastemperatur über etwa 90° C zu verzichten und stattdessen andere Zusatzstoffe zu verwenden.

Es wurde nun gefunden, daß man blockfeste, in Wasser redispergierbare Polymerisat-Pulver durch Versprühen von wäßrigen Polymerisat-Dispersionen, die einen Zusatz von 2 bis 40 Gew.-%, bezogen auf das Polymerisat der Dispersion, an einem wasserlöslichen polymeren Stoff enthalten, in an sich üblicher Weise mit Vorteil herstellen kann, indem man wäßrige Dispersionen von Polymerisaten mit Glastemperaturen unter 50° C, die als wasserlöslichen polymeren Stoff

(a) ein Copolymerisat aus 20 bis 70 Gew.-%/ Vinylpyrrolidon und 30 bis 80 Gew.-% Vinylacetat und/oder

(b) ein wasserlösliches Alkali- und/oder Erdalkalisalz eines Naphthalinsulfonsäure-Formaldehyd-Kondensationsproduktes

enthalten, in einen 100 bis 200°C heißen Warmluftstrom, versprüht. Vorzugsweise beträgt die Menge an zugesetrtem Vinylpyrrolidon-Vinylacetat-Copolymerisat 10 bis 30 Gew.-% und die Vinylpyrrolidon-Copolymerisate enthalten vorzugsweise 50 bis 70 Gew.-% Vinylpyrrolidon und 30 bis 50 Gew.-% Vinylacetat einpolymerisiert.

Ihr K-Wert, bestimmt nach DIN 53 726 in 1-prozentiger wäßriger Lösung oder in Ethanol liegt im allgemeinen im Bereich von 15 bis 35, vorzugsweise von 20 bis 30. Sie können in an sich üblicher Weise durch Lösungs-Copolymerisation von Vinylpyrrolidon und Vinylacetat hergestellt sein und sind im Handel erhältlich. Die Naphthalinsulfonsäure-Formaldehyd-Kondensationsprodukte werden vorzugsweise in einer Menge von 10 bis 30 Gew.-%; bezogen auf das Polymerisat der Dispersion, eingesetzt, und können in an sich üblicher Weise durch Umsetzen von Naphthalinsulfonsäure mit Formaldehyd und Neutralisieren der Anlagerungsprodukte mit Alkalien oder Erdalkalien hergestellt sein. Sie enthalten meist 1 bis 2, insbesondere 1 Formaldehydrest je Naphthalinrest und insbesondere 1 Sulfonsäuregruppe je Molekül. Als Alkali- und Erdalkali können sie vor allem Ammonium-, Natrium-, Kalium- oder Calcium-ionen enthalten. Die Natrium- und Calciumsalze werden im allgemeinen vorgezogen. Derartige Salze von Naphthalinsulfonsäure-Formaldehyd-Kondensationsprodukten sind im Handel erhältlich.

Die wasserlöslichen Vinylpyrrolidon-Vinylacetat-Copolymerisate und die Salze der Naphthalinsulfonsäure-Formaldehyd-Kondensationsprodukte können im Gemisch miteinander oder für sich eingesetzt werden. Werden sie im Gemisch miteinander eingesetzt, so beträgt ihre Menge zusammen 2 bis 40, vorzugsweise 10 bis 30 Gew.-%, bezogen auf das Polymerisat der Dispersion.

Die Polymerisate der wäßrigen Polymerisat-Dispersionen haben Glastemperaturen unter 50° C bis zu -60° C und können eine MFT selbst unter 20° C aufweisen. Derartige Polymer-Dispersionen können in an sich üblicher Weise durch Emulsionspolymerisation olefinisch ungesättigter Monomerer in den üblichen Mengenverhältnissen und unter Verwendung der üblichen Emulgier- und Dispergierhilfsmittel sowie der üblichen Polymerisationsinitiatoren bei Temperaturen zwischen Raumtemperatur und im allgemeinen 100° C hergestellt sein. Der Polymerisatgehalt liegt meist zwischen 30 und 65, insbesondere zwischen 40 und 60 Gew.-%. Als olefinisch ungesättigte Monomere, von denen sich die Polymerisat-Dispersionen ableiten können, seien vinylaromatische Monomere, wie Styrol, monoolefinisch ungesättigte Carbonsäureester mit meist 4 bis 14 C-Atomen, wie besonders Acryl- und Methacrylsäureester von 1 bis 8 C-Atomen enthaltenden Alkanolen sowie Vinylester insbesondere der Essig- und Propionsäure sowie ferner Vinyllaurat und Vinylester sogenannter Versaticsäuren, genannt. Geeignet sind auch Polymerisat-Dispersionen deren Polymerisate sich von Vinylchlorid und/oder Vinylidenchlorid oder von Diolefinen, wie besonders Butadien ableiten. Zusätzlich können die Polymerisate Acrylnitril und/oder meist 3 bis 5 C-Atome enthaltende Mono- und/oder Dicarbonsäuren und/oder deren gegebenenfalls am Stickstoffatom substituierte Amide, wie besonders Acrylsäure, Methacrylsäure, Itaconsäure, Acrylsäureamid, Methacrylsäureamid, N-Methylolacryl- und methacrylsäureamid, N-Methoxymethacrylamid und -methacrylamid einpolymerisiert enthalten. Der Anteil an derartigen Monomeren kann in weiten Bereichen variiert werden. Er liegt bei Acrylnitril im Bereich von 0 bis 40, oft von 10 bis 30 Gew.-%, bei monoolefinisch ungesättigten Monomeren mit polaren Gruppen, wie Acrylsäure oder N-Methylolmethacrylamid, oft bei 0,5 bis 5, insbesondere bei 1 bis 4 Gew.-%. Ferner können die Polymerisate auch in geringen Mengen olefinisch ungesättigte Ester von Alkandiolen, wie Ethylenglykolmonoacrylat und/oder -diacrylat und/oder die entsprechenden -methacrylate sowie Butandiol-1,4-monoacrylat und/oder -diacrylat und/oder die entsprechenden Methacrylate einpolymerisiert enthalten. Die Acryl- und Methacrylester-Copolymerisate können auch Styrol sowie Styrol und Acrylnitril einpolymerisiert enthalten, wobei deren Menge 0 bis 60, insbesondere 20 bis 50 % betragen kann. Geeignete Butadien-Copolymerisate enthalten meist 40 bis 70 % ihres Gewichts Butadien und 60 bis 40 Gew.-% Styrol und/oder Acrylnitril sowie gegebenenfalls bis zu 5 % ihres Gewichts der α, β-monoolefinisch ungesättigten, meist 3 bis 5 C-Atome enthaltenden Mono- und/oder Dicarbonsäuren einpolymerisiert. Schließlich kommen auch solche Polymerisat-Dispersionen in Frage, die Ethylen und Vinylacetat im Gewichtsverhältnis von meist 15 bis 85 zu 85 bis 15 einpolymerisiert enthalten.

Die Vinylpyrrolidon-Vinylacetat-Copolymerisate und/oder die wasserlöslichen Salze der Naphthalinsulfonsäure-Formaldehyd-Kondensationsprodukte werden den wäßrigen Polymerisat-Dispersionen vor deren Versprühen zugesetzt, wobei sich ein Zusatz in Form einer wäßrigen oder auch im Falle der Vinylpyrrolidon-Vinylacetat-Copolymerisate einer alkoholischen Lösung besonders bewährt hat. Derartige Lösungen enthalten meist 10 bis 50, insbesondere 20 bis 50 Gew.-% des Vinylpyrrolidon-Copolymerisats und-/oder der Salze der Naphthalinsulfonsäure-Formaldehyd-Kondensationsprodukte.

Zusätzlich zu den Vinylpyrrolidon-Vinylacetat-Copolymerisaten und/oder den Naphthalinsulfonsäure-Formaldehyd-Kondensationsprodukten können den Polymerisat-Dispersionen noch indifferente wasserunlösliche Stoffe, wie Cellulosepulver, Kalk und feinteiliges $SiO_2$ sowie feinteilige Silikate, zugegeben werden.

Das Versprühen der wäßrigen Polymerisat-Dispersionen, die die Vinylpyrrolidon-Vinylacetat-Copolymerisate und/oder die Salze der Naphthalinsulfonsäure-Formaldehyd-Kondensationsprodukte enthalten, kann in an sich üblicher Weise, insbesondere mit Ein- oder Mehrstoffdüsen durchgeführt werden. Dabei werden die Dispersionen im allgemeinen in einen Warmluftstrom versprüht, in dem das Wasser verdampft. Das Versprühen kann bei atmosphärischem Druck oder unter vermindertem Druck durchgeführt werden. Die Temperatur des für das Sprühtrocknen eingesetzten Warmluftstroms beträgt 10 bis 200, insbesondere 120 bis 170°C. Das

3

Abscheiden der getrockneten redispergierbaren Pulver kann in an sich üblicher Weise, insbesondere unter Verwendung von Zyklonen oder Filterabscheidern durchgeführt werden.

Nach dem neuen Verfahren erhält man blockfeste, in Wasser redispergierbare Polymerisat-Pulver, die sich bei Raumtemperatur lagern lassen, auch dann, wenn für ihre Herstellung wäßrige Haftkleber-Copolymerisat-Dispersionen eingesetzt wurden. Die Pulver sind rieselfähig und in Wasser gut redispergierbar. Sie können auch anderen, pulverförmigen Stoffen, mit denen sie zusammen angewandt werden, zugemischt und unbegrenzt bei Raumtemperatur gelagert werden.

Die nach dem neuen Verfahren erhaltenen, redispergierbaren Polymerisat-Pulver eignen sich insbesondere als Zusätze zu hydraulischen Bindemitteln, wie Gips, Zement, Mörtel und Magnesia-Zement. Soweit zu ihrer Herstellung Haftkleber-Copolymerisat-Dispersionen eingesetzt wurden, eignen sie sich auch zur Herstellung von Haftkleberbeschichtungen oder als Haftkleberpulver, die es ermöglichen, angefeuchtete Oberflächen unter Bestreuen einer der Oberflächen und Zusammenpressen zu verkleben. Sie können zudem zur Herstellung von Gummierungen sowie, nach ihrem Auflösen in Wasser, wie übliche Haftkleber-Dispersionen eingesetzt werden.

Es ist überraschend, daß bei dem erfindungsgemäßen Verfahren blockfeste, redispergierbare Polymerisat-Pulver hergestellt werden können, da z. B. Filme aus den Vinylpyrrolidon-Vinylacetat-Copolymerisaten mit geringen Restwasseranteilen oft klebrig sind und auch beim Einsatz von Mengen an Vinylpyrrolidon-Vinylacetat-Copolymerisaten von beachtlich über 40 %, bezogen auf die in Wasser dispergierten Polymerisate der Polymerisat-Dispersion, blockende, schlecht dispergierbare und praktisch nicht lagerfähige Produkte in schlechter Ausbeute erhalten werden. Es ist weiterhin überraschend, daß die nach dem Verfahren hergestellten redispergierbaren Polymerisat-Pulver trotz der beachtlichen Menge an Zusatzstoff ihre Wirksamkeit bei der Verbesserung der Eigenschaften von hydraulischen Bindemitteln oder als Haftkleber behalten.

Die in den folgenden Beispielen angegebenen MFT's wurden entsprechend DIN 53 787 bestimmt. Die darin angegebenen Glastemperaturen berechnen sich aus den für die Homopolymerisate der in den Polymerisaten enthaltenen Monomeren bekannten Glastemperaturen additiv in bekannter Weise. Für die folgenden Beispiele wurden die wäßrigen Dispersionen im Gemisch mit den Vinylpyrrolidon-Vinylacetat-Copolymerisaten und/oder den Salzen der Naphthalinsulfonsäure-Formaldehyd-Kondensationsprodukte mit einer Temperatur von 25° C der Zweistoffdüse eines IWK-Trockners (Originaldüse) in einer Menge von 80 kg/h zugeführt. Dem IWK-Trockner wurde gleichzeitig in einer Menge von 2300 Nm³/h Warmluft einer Temperatur von 120° C zugeführt und das erhaltene Produkt in einem Zyklon abgeschieden. Die in den Beispielen angegebenen Mengen und Prozente beziehen sich auf das Gewicht.

## Beispiel 1

Zu einer in üblicher Weise hergestellten wäßrigen Dispersion, die 50 % ihres Gewichts an einem Copolymerisat aus 69 Teilen Acrylsäure-n-butyl-ester, 29 Teilen Styrol sowie von 2 Teilen Acrylamid enthält (MFT des Copolymerisats 0° C, Glastemperatur -6° C) werden, bezogen auf 100 Teile des Polymerisats, 30 Teile einer 40-%/-igen wäßrigen Lösung eines Copolymerisats aus 60 Teilen Vinylpyrrolidon und 40 Teilen Vinylacetat des K-Werts 28 zugegeben. Bei der Sprühtrocknung wird in 90-%-iger Ausbeute ein feinteiliges Polymerisat-Pulver erhalten. Der in der Apparatur bei der Sprühtrocknung gebildete geringe Wandbelag kann durch Abblasen leicht entfernt werden und ist nicht verfilmt.

Das erhaltene redispergierbare Polymerisat-Pulver blockt praktisch nicht und kann längere Zeit ohne Verblocken gelagert werden. Es eignet sich insbesondere als Bindemittel für Spachtelmassen, in Mengenanteilen von meist 1 bis 20, insbesondere von etwa 5 bis 15 Gew.-%/, bezogen auf die Spachtelmasse, deren Abriebfestigkeit und Flexibilität durch den Zusatz stark erhöht wird.

Eine Verdüsung der Polymerisat-Dispersion ohne Zusatz des Vinylpyrrolidon-Vinylacetat-Copolymerisats ist praktisch nicht möglich, da Filmbildung auf der Trockenwand erfolgt und kein pulverförmiges Produkt ausgetragen werden kann.

## Beispiel 2

Zu einer 50-%-igen wäßrigen Dispersion eines Copolymerisats aus 88 Teilen 2-Ethylhexylacrylat, 9 Teilen Acrylnitril und 3 Teilen Acrylsäure der MFT 0°C und der Glastemperatur -60°C wird eine 50-%-ige wäßrige Lösung eines Vinylpyrrolidon-Vinylacetat-Copolymerisats des K-Werts 28 mit einem Vinylacetat-Anteil von 40 % in einer Menge von 50 %, bezogen auf die Menge des Polyacrylats zugesetzt. Das erhaltene Gemisch wird sprühgetrocknet und man erhält ein gut rieselfähiges, redispergierbares, nichtblockendes Polymerisat-Pulver, das für die Herstellung von Haftklebeartikeln verwendet werden kann.

Die wäßrige Dispersion des Ethylhexylacrylat-Copolymerisats läßt sich ohne Zusatz des Vinylpyrrolidon-Vinylacetat-Copolymerisats nicht sprühtrocknen, da ein stark klebriger, verfilmter Belag in der Trockenapparatur Bebildet wird und kein Pulveraustrag möglich ist.

**Beispiel 3**

Zu einer 50-%-igen wäßrigen Dispersion eines Mischpolymerisats aus 30 Teilen Acrylsäure-n-butyl-ester und 70 Teilen Vinylpropionat (MFT 10° C, Glastemperatur + 10° C) gibt man, bezogen auf das Polymerisat, 30 % eines Copolymerisats aus 60 Teilen Vinylpyrrolidon und 40 Teilen Vinylacetat (K-Wert 28) in Form einer 20-%-igen wäßrigen Lösung. Das Gemisch wird sprühgetrocknet und man erhält ein gut rieselfähiges, und redispergierbares Polymerisat-Pulver, das nicht zum Blocken neigt, in einer Ausbeute von über 90 %. Das Polymerisat-Pulver eignet sich für die Herstellung von flexiblen Spachtelmassen und von Dünnbettmörteln.

Ohne Zusatz des Vinylpyrrolidon-Vinylacetat-Copolymerisats kann die verwendete Acrylester-Vinylester-Copolymerisat-Dispersion nicht sprühgetrocknet werden.

**Beispiel 4**

Zu einer 50-%-igen wäßrigen Dispersion eines Mischpolymerisats von 69 Teilen Acrylsäure-n-butylester, 29 Teilen Styrol und 2 Teilen Acrylamid (MFT 20° C, Glastemperatur -6° C) gibt man 30 Gew.-%, bezogen auf das Acrylester-Styrol-Copolymerisat, des Natriumsalzes eines Naphthalinsulfonsäure-Formaldehyd-Kondensationsproduktes, das 2 Formaldehyd-Reste ankondensiert enthält, 1 Sulfonsäure-Reste pro Mol aufweist. Das Gemisch ergibt in über 90-%-iger Ausbeute ein gut rieselfähiges, redispergierbares Polymerisat-Pulver, das nicht blockt und lagerbeständig ist.

Es kann mit Vorteil als Zusatzmittel zu hydraulischen Bindemitteln, insbesondere zu Mörtel und Beton, verwendet werden, die es in Form seiner wäßrigen Dispersion und auch als Pulver beim Ansetzen verflüssigt. Die unter seiner Verwendung hergestellten Mörtel und Betons sind elastifiziert und weisen eine erhöhte Biegezugfestigkeit und Druckfestigkeit auf. Außerdem kann das redispergierbare Polymerisat-Pulver zur Herstellung von flexiblen Spachtelmassen eingesetzt werden.

**Beispiel 5**

Zu einer 50-%-igen wäßrigen Dispersion eines Copolymerisats aus 88 Teilen Ethylhexylacrylat, 9 Teilen Acrylnitril und 3 Teilen Acrylsäure der MFT 0°C und der Glastemperatur -60°C gibt man 50 Gew.-%, bezogen auf die Menge des Polyacrylats des in Beispiel 4 angegebenen Natriumsalzes. Das erhaltene Gemisch wird sprühgetrocknet und man erhält ein gut rieselfähiges, redispergierbares, nichtblockendes Polymerisat-Pulver, das für die Herstellung von Haftklebeartikeln verwendet werden kann.

**Beispiel 6**

Zu einer 50-%-igen wäßrigen Dispersion eines Mischpolymerisats aus 30 Teilen Acrylsäure-n-butylester und 70 Teilen Vinylpropionat (MFT 10° C, Glastemperatur + 10° C) gibt man, bezogen auf das Polymerisat, 30 % des in Beispiel 4 angegebenen Natriumsalzes. Das Gemisch wird sprühgetrocknet und man erhält ein gut rieselfähiges und redispergierbares Polymerisat-Pulver, das nicht zum Blocken neigt, in einer Ausbeute von über 90 %. Das Polymerisat- Pulver eignet sich für die Herstellung von flexiblen Spachtelmassen und von Dünnbettmörteln.

**Beispiel 7**

Man arbeitet wie in Beispiel 1 angegeben, verwendet jedoch nur 15 Teile der 40-%/-igen wäßrigen Vinylpyrrolidon-Vinylacetat-Copolymerisat-Lösung und zusätzlich 15 Gew.-%, bezogen auf das Acrylester-Styrol-Copolymerisat, des in Beispiel 4 angegebenen Natriumsalzes eines Naphthalinsulfonsäure-Formaldehyd-Kondensationsproduktes in Form einer 40-°%-igen wäßrigen Lösung. Bei der Sprühtrocknung wird ein feinteiliges Polymerisatpulver erhalten, das als elastifizierendes Zusatzmittel zu hydraulischen Bindemitteln, wie besonders Mörtel und Beton, geeignet ist.

**Patentansprüche**

1. Verfahren zum Herstellen von blockfesten, in Wasser redispergierbaren Polymerisat-Pulvern durch Versprühen von wäßrigen Polymerisat-Dispersionen, die einen Zusatz von 2 bis 40 Gew.%, bezogen auf das Polymerisat der Dispersion, an wasserlöslichen polymeren Stoffen enthalten, in an sich üblicher Weise, <u>dadurch</u>

gekennzeichnet, daß man wäßrige Dispersion von Polymerisaten mit Glastemperaturen unter 50° C, die als wasserlöslichen polymeren Stoff

a) ein Copolymerisat aus 20 bis 70 Gew.-% Vinylpyrrolidon und 30 bis 80 Gew.-% Vinylacetat und/oder

b) ein wasserlösliches Alkali- und/oder Erdalkalisalz eines Naphthalinsulfonsäure-Formaldehyd-Kondensationsproduktes

enthalten, in einem 100 bis 200°C heißen Warmluftstrom versprüht.

## Claims

1. A process for preparing a non-blocking, waterredispersible polymer powder by spray dispensing in a conventional manner an aqueous polymer dispersion containing from 2 to 40% by weight, based on the polymer in the dispersion, of a water-soluble polymeric substance, which comprises spraying into a hot air stream at from 100 to 200°C an aqueous dispersion of a polymer having a glass transition temperature below 50°C where the water-soluble polymeric substance contained therein comprises

a) a copolymer of from 20 to 70% by weight of vinylpyrrolidone and from 30 to 80% by weight of vinyl acetate or

b) a water-soluble alkali metal or alkaline earth metal salt of a naphthalenesulfonic acid-formaldehyde condensation product.

## Revendications

1. Procédé de préparation de polymères pulvérulents non agglomérants, pouvant être redispersés dans de l'eau, par une pulvérisation connue en soi de dispersions aqueuses de polymères, contenant un ajout de 2 à 40 % du poids du polymère dans la dispersion de substances polymères hydrosolubles, caractérisé en ce que l'on pulvérise dans un courant d'air chaud, se trouvant entre 100 et 200°C, une dispersion aqueuse de polymères avec des températures de transition vitreuse inférieures à 50°C, qui contient comme substance polymère hydrosoluble

a) un copolymère de 20 à 70 % en poids de vinyl-pyrrolidone et de 30 à 00 % en poids d'acétate de vinyle et(ou)

b) un sel de métal alcalin et(ou) de métal alcalino-terreux hydrosoluble d'un produit de condensation de l'aldéhyde formique et de l'acide naphtalène-sulfonique.